# EUROPEAN PATENT APPLICATION

(11) **EP 4 530 174 A1**
(43) Date of publication of application: **02.04.2025**
(21) Application number: 24202977.5
(22) Date of filing: 26.09.2024
(51) Int. Cl.: B62K 25/28, B62J 13/00

(54) **A SWING ARM ASSEMBLY FOR A VEHICLE**

(30) Priority: 27.09.2023 IN 202341064971
(71) Applicant: TVS Motor Company Limited, 600006 Chennai (IN)
(72) Inventor: Moulick, Enanko, 600006 Chennai (IN); Nagaraju, Deepak, 600006 Chennai (IN); Dharmaraj, Krishna Prasath, 600006 Chennai (IN); Kulkarni, Kiran, 600006 Chennai (IN)
(74) Representative: Patentanwaltskanzlei Matschnig & Forsthuber OG

(57) **Abstract**

The present subject matter relates generally to a swing arm assembly (200) for a vehicle. The swing arm assembly (200) comprises a first casing (201) and a second casing (202). The first casing (201) is provided on a first side of the swing arm assembly (200). The first casing (201) is configured to receive a plurality of components of a transmission assembly. The second casing (202) is provided on a second side of the swing arm assembly (200). The second casing (202) includes an immediate housing for a plurality of components of an electric motor. The second casing (202) is configured to directly receive the plurality of components of the electric motor through an opening (203). The electric motor is a coverless electric motor.

## Description

### TECHNICAL FIELD

The present subject matter relates generally to a swing arm assembly for a vehicle. More particularly but not exclusively, the present subject matter relates to a swing arm assembly for an electric vehicle.

### BACKGROUND

A swingarm is a single or double-sided mechanical device which attaches the rear wheel of a motorcycle to the vehicle frame. The swingarm is pivotally coupled to the vehicle frame. This allows the swingarm and the rear wheel to move up and down with the undulations of the road, in conjunction with one or more shock absorbers. In existing designs with internal combustion engines, the crankcase not only acts as a housing for the crankshaft and other components, but also bears load as a swing arm. This is not in the case of electric or hybrid electric vehicle. In the electric vehicles, an electric motor and a transmission are provided in place of the internal combustion engine and the crankcase respectively.

The body of the electric motor comprises a motor casing. The motor casing accommodates the stator, the rotor and other motor components and protects them from the external environment. The motor casing is mounted to the frame or to the swing arm separately or the motor along with the motor casing is placed inside the swing arm. However, the motor casing does not carry any load which comes to the vehicle frame so as to act as the swingarm.

The motor casing weighs around 1-1.5 kg which adds an extra weight to the vehicle. Additionally, the motor casing consumes extra space, increases the part count and associated costs. This also adds to the assembly time, increases manufacturability issues and complexity of the vehicle.

In other prior arts, the motor casing is placed inside the swing arm. The motor casing is not a load bearing member. This adds one extra assembly process, which adds to overall assembly time as well as its complexity. Further, the placement of the motor casing inside the swing arm obstructs natural cooling of the electric motor. This necessitates the forced cooling of the electric motor thereby further increasing the part count and associated costs.

The disclosed invention addresses the above cited drawbacks of the prior art by providing a novel and inventive swing arm assembly for a vehicle. The disclosed swing arm assembly forms an immediate housing for the stator, the rotor and other motor components. Additionally, the disclosed swing arm assembly accommodates the transmission assembly while simultaneously acting as a load bearing member. The requirement of the separate motor casing or cover is successfully eliminated and natural cooling of the motor is effectively facilitated. Therefore, reducing the part count, weight and cost of the vehicle.

### BRIEF DESCRIPTION OF THE DRAWINGS

The details are described with reference to an embodiment of a swing arm assembly and a second casing for the swing arm assembly. The same numbers are used throughout the drawings to refer similar features and components.
**Figure 1** illustrates a perspective view of the second side of the swing arm assembly with the second casing detachably attached to the first casing.
**Figure 2** illustrates a perspective view of a first casing on a first side of the swing arm assembly.
**Figure 3a** illustrates a perspective view of a first side of the second casing.
**Figure 3b** illustrates a perspective view of a second side of the second casing.
**Figure 4a** illustrates a perspective view of a first side of a lid for the second casing.
**Figure 4b** illustrates a perspective view of a second side of the lid.
**Figure 5** illustrates a perspective view of the first side of the swing arm assembly with the second casing structurally integrated to the first casing.
**Figure 6** illustrates a perspective view of the second side of the swing arm assembly with the second casing structurally integrated to the first casing.

### SUMMARY OF THE INVENTION

The present subject matter relates to a swing arm assembly for a vehicle. The swing arm assembly comprises a first casing and a second casing. The first casing is provided on a first side of the swing arm assembly. The first casing is configured to receive a plurality of components of a transmission assembly. The second casing is provided on a second side of the swing arm assembly. The second casing is an immediate housing for a plurality of components of an electric motor. The second casing is configured to directly receive the plurality of components of the electric motor through an opening. The electric motor is a coverless electric motor.

The present subject matter also relates to a second casing for a swing arm assembly of a vehicle. The second casing is configured to be detachably attached on a second side of the swing arm assembly. The second casing is an immediate housing for a plurality of components of an electric motor. The second casing is configured to directly receive the plurality of components of the electric motor though an opening. The electric motor is a coverless electric motor.

The present subject matter further relates to an electric vehicle. The electric vehicle comprises one or more rotating members, an electric motor, a transmission assembly and a swing arm assembly. The one or more rotating members is configured to support a motion of the vehicle. The electric motor is configured to propel the motion of the vehicle. The transmission assembly is configured to transmit a torque and a force from the electric motor to the rotating member. The swing arm assembly comprises a first casing and a second casing. The first casing is provided on a first side of the swing arm assembly. The first casing is configured to receive a plurality of components of the transmission assembly. The second casing is provided on a second side of the swing arm assembly. The second casing is an immediate housing for a plurality of components of an electric motor. The second casing is configured to directly receive the plurality of components of the electric motor through an opening. The electric motor is a coverless electric motor.

### DETAILED DESCRIPTION

In order to overcome one or more of the above-mentioned challenges, the present invention provides a swing arm assembly for a vehicle and a second casing for the swing arm assembly.

The improved swing arm assembly accommodates the transmission assembly and a coverless electric motor while simultaneously acting as a load bearing member. Thus, the disclosed invention successfully eliminates the requirement of a separate cover or casing for an electric motor. The natural cooling of the electric motor remains unimpeded by any intervening electric motor cover. Therefore, the natural cooling of the electric motor is facilitated and the need for the forced cooling of the electric motor is eliminated. The elimination of the separate cover and the forced cooling mechanism for an electric motor reduces the part count and weight of the vehicle while improving energy efficiency. The manufacturing cost of the vehicle is also reduced. The swingarm assembly help in reducing the assembly time and assembly complexity and manufacturability while promoting ease of serviceability.

As per one embodiment of the invention, the swing arm assembly comprises a first casing and a second casing. The first casing is provided on a first side of the swing arm assembly. The first casing is configured to receive a plurality of components of a transmission assembly. The second casing is provided on a second side of the swing arm assembly. The second casing includes immediate housing for a plurality of components of an electric motor.

The second casing is configured to directly receive the plurality of components of the electric motor through an opening. The electric motor is a coverless electric motor.

As per one embodiment of the invention, the swing arm assembly includes an input shaft opening. The input shaft opening is configured to receive an input shaft.

As per one embodiment of the invention, in the swing arm assembly, the input shaft is configured to transmit a torque from the electric motor to the transmission assembly.

As per one embodiment of the invention, the swing arm assembly includes a rear axle opening. The rear axle opening is configured to receive a rear axle of the vehicle. The rear axle is configured to rotatably support one or more rotating members of the vehicle.

As per one embodiment of the invention, in the swing arm assembly, the one or more rotating members are configured to support a motion of the vehicle.

As per one embodiment of the invention, the swing arm assembly includes a first pivoting arm and a second pivoting arm. The first pivoting arm is provided on a front portion of the first casing. The first pivoting arm is provided with a first pivot opening. The second pivoting arm is provided on a front portion of the second casing. The second pivoting arm is provided with a second pivot opening. The first pivot opening and the second pivot opening are configured to pivotally couple the swing arm assembly to a frame of the vehicle.

As per one embodiment of the invention, in the swing arm assembly, the second casing is structurally integrated with the first casing of the swing arm assembly.

As per one embodiment of the invention, in the swing arm assembly, the second casing is configured to be detachably attached to the first casing using a plurality of fastening members. The plurality of fastening members is configured to be received by a plurality of fastening holes on a first side of the second casing. The first side of the second casing is configured to interface the second side of the first casing of the swing arm assembly.

As per one embodiment of the invention, in the swing arm assembly, the opening is provided on a second side of the second casing. The opening is configured to receive a lid. The lid is configured to cover the plurality of components of the electric motor received by the second casing.

As per one embodiment of the invention, in the swing arm assembly, the second casing is provided with a plurality of fins. The plurality of fins is disposed on an outer peripheral surface of the second casing. The plurality of fins is configured to facilitate heat dissipation from the plurality of components of the electric motor.

As per one embodiment of the invention, swing arm assembly includes a mounting arm. The mounting arm is integrally formed on the first casing. The mounting arm is provided with a mounting opening. The mounting opening is configured to engage with a suspension member of the vehicle.

Another embodiment of the invention relates to a second casing for a swing arm assembly of a vehicle. The second casing includes an outer surface which is exposed to air and an inner surface. The second casing is configured to be detachably attached on a second side of the swing arm assembly using the outer surface. The inner surface defines an immediate housing for a plurality of components of an electric motor. The electric motor is a coverless electric motor. The immediate housing is configured to directly receive the plurality of components of the electric motor though an opening.

As per another embodiment of the invention, the swing arm assembly includes a first casing. The first casing is provided on a first side of the swing arm assembly. The first casing is configured to receive a plurality of components of a transmission assembly. The second casing is detachably attached to the first casing.

As per another embodiment of the invention, in the second casing, the opening is provided on a second side of the second casing, the opening is configured to receive a lid. The lid is configured to cover the plurality of components of the electric motor received by the second casing.

As per another embodiment of the invention, the second casing includes a plurality of fins on the outer surface. The plurality of fins is configured to facilitate a heat dissipation from the plurality of components of the electric motor.

Yet another embodiment of the invention relates to an electric vehicle. The electric vehicle comprises one or more rotating members, an electric motor, a transmission assembly and a swing arm assembly. The one or more rotating members is configured to support a motion of the vehicle. The electric motor is configured to propel the motion of the vehicle. The transmission assembly is configured to transmit a torque and a force from the electric motor to the rotating member. The swing arm assembly comprises a first casing and a second casing. The first casing is provided on a first side of the swing arm assembly. The first casing is configured to receive a plurality of components of the transmission assembly. The second casing is provided on a second side of the swing arm assembly. The second casing includes an immediate housing for a plurality of components of an electric motor. The second casing is configured to directly receive the plurality of components of the electric motor through an opening. The electric motor is a coverless electric motor.

The embodiments of the present invention will now be described in detail with reference to an embodiment of the swing arm assembly, along with the accompanying drawings. However, the disclosed invention is not limited to the present embodiments.

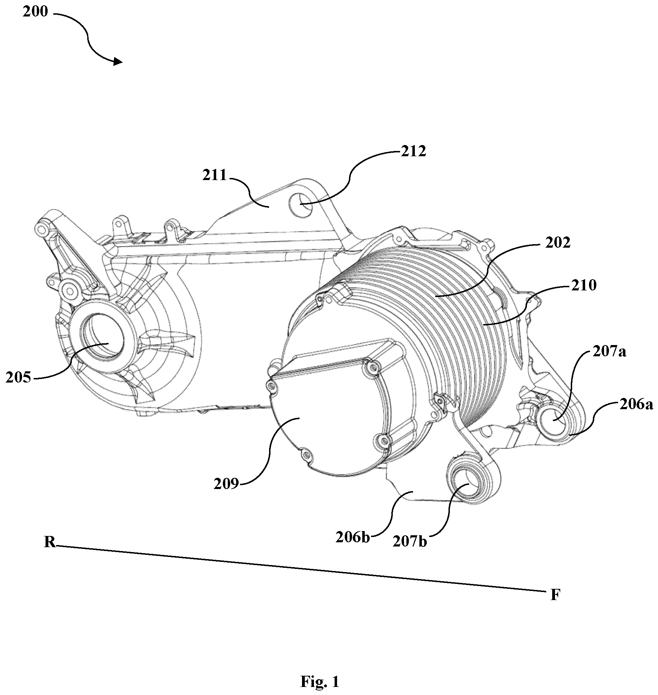

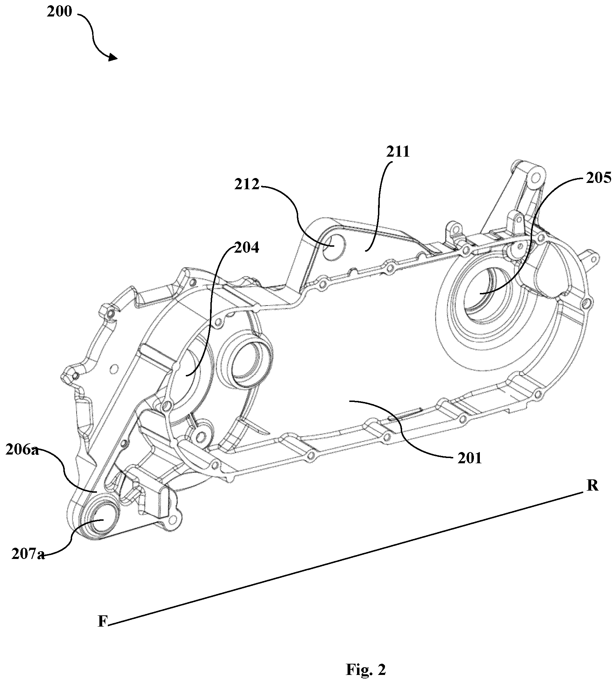

The embodiments shown in **Figure 1** and **Figure 2** are taken together for discussion. The **figure 1** illustrates a perspective view of the second side of the swing arm assembly (200) with a second casing (202) detachably attached to a first casing (201). The **figure 2** illustrates a perspective view of the first casing (201) on a first side of the swing arm assembly (200). The swing arm assembly (200) is aligned along a front-rear axis (F-R) of the vehicle. The front-rear axis (F-R) extends along a longitudinal direction of the vehicle. The front of the vehicle and the rear of the vehicle are in respect of the rider of the vehicle. In the embodiment shown in the figures, a single-sided swingarm is illustrated. However, the disclosed invention is not limited to the single-sided swingarms. The disclosed invention can also be worked upon with the double-sided swingarms and various other variants.

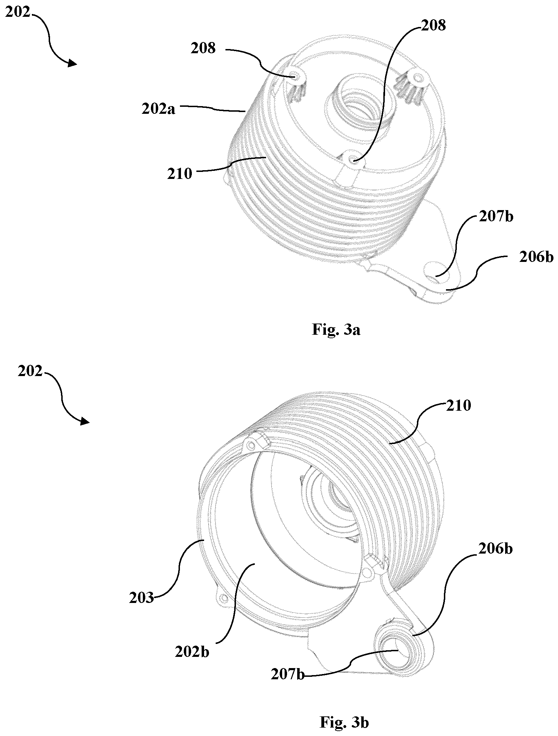

The swing arm assembly (200) comprises the first casing (201) and the second casing (202). The first casing (201) is provided on a first side of the swing arm assembly (200) and the second casing (202) is provided on a second side of the swing arm assembly (200). The first side and the second side can be the right-hand side and the left-hand side of the swing arm assembly (200), or *vice versa.* The first casing (201) receives a plurality of components of a transmission assembly. The transmission assembly transfers the power generated by the prime-mover of the vehicle to the rotating member of the vehicle. The second casing (202) houses a plurality of components of an electric motor. The second casing (202) directly receives the plurality of components of the electric motor through an opening (203, shown in Fig. 3b). The plurality of components of the electric motor includes but not limited to brushes, stator, rotor, windings, coils, bearings, and shaft. However, the plurality of components of the electric motor does not include any separate cover or casing because the electric motor is a coverless electric motor.

The swing arm assembly (200) includes an input shaft opening (204) for receiving an input shaft. The input shaft is the shaft of the electric motor which transmits a torque from the electric motor to the transmission assembly.

The swing arm assembly (200) includes a rear axle opening (205) for receiving a rear axle of the vehicle. The rear axle rotatably supports a rotating member of the vehicle. The rotating member supports a motion of the vehicle. The rotating member includes but not limited to the rear wheel of the vehicle.

The swing arm assembly (200) includes a first pivoting arm (206a) and a second pivoting arm (206b). The first pivoting arm (206a) is provided on a front portion of the first casing (201). The front portion of the first casing (201) faces the front direction of the vehicle, when seen from rider's perspective. The first pivoting arm (206a) has a first pivot opening (207a). The second pivoting arm (206b) is provided on a front portion of the second casing (202). The front portion of the second casing (202) faces the front direction of the vehicle, when seen from rider's perspective. The second pivoting arm (206b) is provided with a second pivot opening (207b). The first pivot opening (207a) and the second pivot opening (207b) pivotally couple the swing arm assembly (200) to a frame of the vehicle. The first pivot opening (207a) and the second pivot opening (207b) are concentrically aligned in order to pivotally couple the swing arm assembly (200). The pivoted coupling of the swing arm assembly (200) allows the rotating to move up and down with the undulations of the road.

The second casing (202) detachably attaches to the first casing (201) using a plurality of fastening members (not shown). The plurality of fastening members is received by a plurality of fastening holes (208, shown in Fig. 3a) on a first side of the second casing (202). The first side of the second casing (202) interfaces the second side of the first casing (201) of the swing arm assembly (200). The fastening members (not shown) includes but not limited to bolts and screws.

The embodiments shown in **Figure 3a** and **Figure 3b** are taken together for discussion. **Figure 3a** illustrates a perspective view of a first side of the second casing (202). **Figure 3b** illustrates a perspective view of a second side of the second casing (202). The first side of the second casing (202) interfaces with the second side (shown in Fig. 1) of the first casing (201) of the swing arm assembly (200). Further, second casing (202) includes an outer surface (202a) which is exposed to the air. Second casing (202) also includes an inner surface (202b) which defines an immediate housing which is a space that is configured to accommodate plurality of components of an electric motor installed within the immediate housing. In one aspect of the invention, the second casing (202) provides the immediate housing on a second side of the swing arm assembly (200). The second casing (202) for the swing arm assembly (200, shown in Fig. 1) of a vehicle detachably attaches to the second side of the swing arm assembly (200, shown in Fig. 1) using the outer surface (202a). In one aspect of the invention the second casing (202) is detachably attached to the first casing (201). The immediate housing of the second casing (202) directly receives the plurality of components of the electric motor though the opening (203). The opening (203) is provided on the second side of the second casing (202). The plurality of components of the electric motor includes but not limited to brushes, stator, rotor, windings, coils, bearings, and shaft. However, the plurality of components of the electric motor does not include any separate cover or casing because the electric motor is a coverless electric motor.

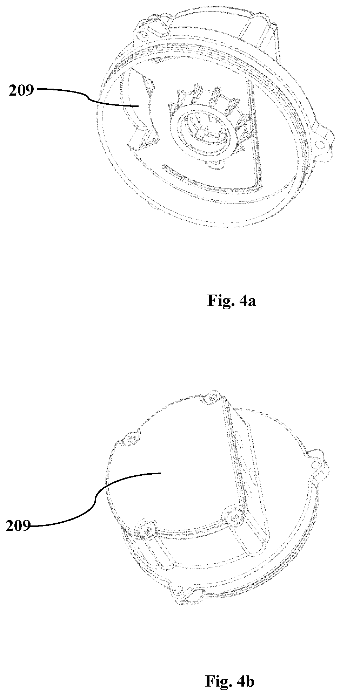

The opening (203), provided on second side of the second casing (202), receives a lid (209, shown in Fig. 4a). The lid (209, shown in Fig. 4a) covers and protects the plurality of components of the electric motor received by the second casing (202). The swing arm assembly (200, shown in Fig. 1) includes a first casing (201, shown in Fig. 2). The first casing (201, shown in Fig. 2) is provided on a first side of the swing arm assembly (200, shown in Fig. 1), the first casing (201, shown in Fig. 2) is configured to receive a plurality of components of a transmission assembly. The transmission assembly transfers the power generated by the prime-mover of the vehicle to the rotating member of the vehicle.

The second casing (202) includes a plurality of fins (210). The plurality of fins (210) is disposed on the outer surface (202a) of the second casing (202). The plurality of fins (210) facilitates a heat dissipation from the plurality of components of the electric motor. The heat travels from the electric motor to the inner surface (202b) from where it reaches the outer surface (202a) through conduction. Since the outer surface (202a) is exposed to air, the heat can be easily dissipated. The plurality of fins (210) help in enhancing the effective surface area of the outer surface (202a) thereby enhancing heat dissipation. In the prior art pertaining to the disclosed, the plurality of fins (210) is provided on the cover or separate casing of the electric motor and the already encased electric motor is placed in another chamber. However, in the disclosed invention, the plurality of fins (210) is provided directly on the second casing (202). Therefore, offering better clearance and less interference to the plurality of fins (210) for heat dissipation. The second casing (202) receives heat without any interference or hinderance due to the absence of any separate casing or cover for the plurality of components of the electric motor. Further, the requirement of forced cooling mechanisms for the plurality of components of the electric motor is also eliminated as the plurality of fins (210) are exposed.

The embodiments shown in **Figure 4a** and **Figure 4b** are taken together for discussion. **Figure 4a** illustrates a perspective view of a first side of the lid (209) for the second casing (202, shown in Fig. 3b). **Figure 4b** illustrates a perspective view of a second side of the lid (209). The second side of the lid (209) interfaces with the opening (203, shown in Fig. 3b) of the second casing (202, shown in Fig. 3b). The opening (203, shown in Fig. 3b) receives the lid (209). The lid (209) covers and protects the plurality of components of the electric motor received by the second casing (202, shown in Fig. 3b). The lid (209) can be can be attached to the opening (203, shown in Fig. 3b) of the second casing (202, shown in Fig. 3b) by using mounting members like screws, bolts, nuts and brackets for secured attachment.

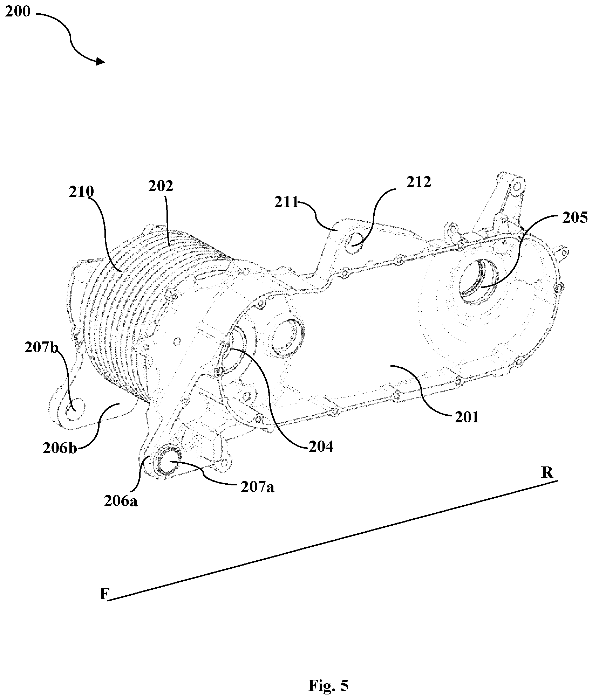

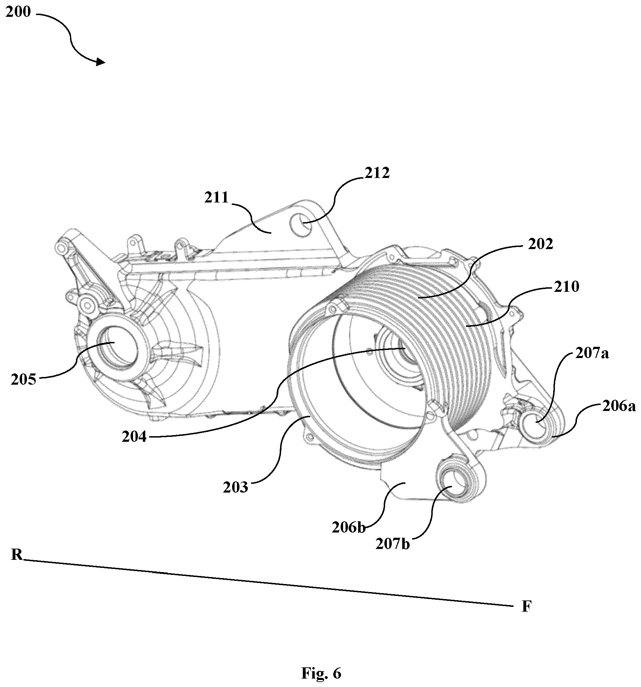

The embodiments shown in **Figure 5** and **Figure 6** are taken together for discussion. **Figure 5** illustrates a perspective view of the first side of the swing arm assembly (200) with the second casing (202) structurally integrated to the first casing (201). **Figure 6** illustrates a perspective view of the second side of the swing arm assembly (200) with the second casing (202) structurally integrated to the first casing (201). The second casing (202) can be structurally integrated with the first casing (201) of the swing arm assembly (200). The second casing (202) and the first casing (201) are formed out of a single casting i.e., both the first casing (201) and the second casing (202) are integrally formed as single unit (single component). This reduces part count and facilitates ease in assembly, reduces assembly time as well. Further, the surface area for load transfer from the first casing (201) to the second casing (202) has increased. The integration of the first casing (201) and the second casing (202) also results in enhancement of the structural strength of the swing arm assembly (200).

The swing arm assembly (200) includes a mounting arm (211). The mounting arm (211) is integrally formed on the first casing (201) and the mounting arm (211) has a mounting opening (212). The mounting opening (212) engages with a suspension member (not shown) of the vehicle. The suspension member (not shown) handles the stability and keeps the balance during braking. Secondly, the suspension member (not shown) offers comfort to the rider and pillion during bumps and uneven surfaces. The suspension member (not shown) includes but not limited to spring loaded hydraulic suspension, gas filled or nitrox charged shock absorber, mono shock absorber and dual shock absorber.

One of the embodiment of the present invention provides an electric vehicle. The electric vehicle comprises one or more rotating members, an electric motor, a transmission assembly, and a swing arm assembly (200). The swing arm assembly (200) comprises a first casing (201) and a second casing (202). The first casing (201), on a first side of the swing arm assembly (200), receives a plurality of components of the transmission assembly. The second casing (202), on a second side of the swing arm assembly (200), serves as an immediate housing for a plurality of components of an electric motor. The second casing (202) directly receives the plurality of components of the electric motor through an opening (203). The electric motor is a coverless electric motor.

The disclosed swing arm assembly (200) accommodates the transmission assembly and a coverless electric motor while simultaneously acting as a load bearing member. Thus, the disclosed invention successfully eliminates the requirement of a separate cover or casing for the electric motor. The natural cooling of the electric motor remains unimpeded by any intervening electric motor cover. Therefore, the natural cooling of the electric motor is facilitated and the need for the forced cooling of the electric motor is eliminated. The elimination of the separate cover and the forced cooling mechanism for the electric motor reduces the part count and weight of the vehicle while improving energy efficiency. The manufacturing cost of the vehicle is also reduced. Reduction in part count and simple configuration of the swing arm assembly (200) results in reduction in time taken for assembly and servicing of the vehicle.

The present disclosed invention relates to a swing arm assembly (200) which is described using figures for a two wheeler. However, the disclosed invention is not limited to two-vehicular applications. They can be applied to other multi-wheeled vehicles and non-vehicular applications. Further, , as used in this specification and the appended claims, the singular forms "a," "an" and "they" can include plural referents unless the content clearly indicates otherwise. Further, when introducing elements/components/etc. of the assembly/system described and/or illustrated herein, the articles "a", "an", "the", and "said" are intended to mean that there is one or more of the element(s)/component(s)/etc. The terms "comprising", "including", and "having" are intended to be inclusive and mean that there may be additional element(s)/component(s)/etc. other than the listed element(s)/component(s)/etc.

This written description uses examples to provide details on the disclosure, including the best mode, and also to enable any person skilled in the art to practice the disclosure, including making and using any assemblies, devices or systems. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. It is to be understood that the aspects of the embodiments are not necessarily limited to the features described herein. Many modifications and variations of the present subject matter are possible in the light of above disclosure.

### LIST OF REFERENCE NUMERALS

- 200: Swing arm assembly
- 201: First casing
- 202: Second casing
- 202a: Outer surface of the second casing
- 202b: Inner surface of the second casing
- 203: Opening
- 204: Input shaft opening
- 205: Rear axle opening
- 206a: First pivoting arm
- 206b: Second pivoting arm
- 207a: First pivot opening
- 207b: Second pivot opening
- 208: Plurality of fastening holes
- 209: Lid
- 210: Plurality of fins
- 211: Mounting arm
- 212: Mounting opening

## Claims

1. A swing arm assembly (200) for a vehicle, the swing arm assembly (200) comprising:
a first casing (201), the first casing (201) being provided on a first side of the swing arm assembly (200), and the first casing (201) being configured to receive a plurality of components of a transmission assembly; and
a second casing (202), the second casing (202) being provided on a second side of the swing arm assembly (200), the second casing (202) including an immediate housing for a plurality of components of an electric motor, and the second casing (202) being configured to directly receive the plurality of components of the electric motor through an opening (203) and the electric motor being a coverless electric motor.

2. The swing arm assembly (200) for the vehicle as claimed in claim 1, wherein the swing arm assembly (200) includes an input shaft opening (204), the input shaft opening (204) being configured to receive an input shaft.

3. The swing arm assembly (200) for the vehicle as claimed in claim 1, wherein the swing arm assembly (200) includes a rear axle opening (205), the rear axle opening (205) being configured to receive a rear axle of the vehicle and the rear axle being configured to rotatably support one or more rotating members of the vehicle.

4. The swing arm assembly (200) for the vehicle as claimed in claim 1, wherein the swing arm assembly (200) includes a first pivoting arm (206a) and a second pivoting arm (206b); the first pivoting arm (206a) being provided on a front portion of the first casing (201), the first pivoting arm (206a) being provided with a first pivot opening (207a); the second pivoting arm (206b) being provided on a front portion of the second casing (202), the second pivoting arm (206b) being provided with a second pivot opening (207b); and the first pivot opening (207a) and the second pivot opening (207b) being configured to pivotally couple the swing arm assembly (200) to a frame of the vehicle.

5. The swing arm assembly (200) for the vehicle as claimed in claim 1, wherein the second casing (202) being structurally integrated with the first casing (201) of the swing arm assembly (200).

6. The swing arm assembly (200) for the vehicle as claimed in claim 1, wherein the second casing (202) being configured to be detachably attached to the first casing (201) using a plurality of fastening members, the plurality of fastening members being configured to be received by a plurality of fastening holes (208) on a first side of the second casing (202), the first side of the second casing (202) being configured to interface the second side of the first casing (201) of the swing arm assembly (200).

7. The swing arm assembly (200) for the vehicle as claimed in claim 1, wherein the opening (203) being provided on a second side of the second casing (202), the opening (203) being configured to receive a lid (209), the lid (209) being configured to cover the plurality of components of the electric motor received by the second casing (202).

8. The swing arm assembly (200) for the vehicle as claimed in claim 1, wherein the second casing (202) being provided with a plurality of fins (210), the plurality of fins (210) being disposed on an outer peripheral surface of the second casing (202), the plurality of fins (210) being configured to facilitate heat dissipation from the plurality of components of the electric motor.

9. The swing arm assembly (200) for the vehicle as claimed in claim 1, wherein the swing arm assembly (200) including a mounting arm (211), the mounting arm (211) being integrally formed on the first casing (201), the mounting arm (211) being provided with a mounting opening (212), the mounting opening (212) being configured to engage with a suspension member of the vehicle.

10. A second casing (202) for a swing arm assembly (200) of a vehicle, the second casing (202) comprising:
an outer surface (202a), the outer surface (202a) being exposed to air, and the second casing (202) being configured to be detachably attached on a second side of the swing arm assembly (200) using the outer surface (202a);
an inner surface (202b), the inner surface (202b) defining an immediate housing for a plurality of components of an electric motor, the electric motor being a coverless electric motor and the immediate housing being configured to directly receive the plurality of components of the electric motor though an opening (203).

11. The second casing (202) for the swing arm assembly (200) of the vehicle as claimed in claim 10, wherein the swing arm assembly (200) includes a first casing (201), the first casing (201) being provided on a first side of the swing arm assembly (200), the first casing (201) being configured to receive a plurality of components of a transmission assembly and the second casing (202) being detachably connected to the first casing (201).

12. The second casing (202) for the swing arm assembly (200) of the vehicle as claimed in claim 10, wherein the wherein the opening (203) being provided on a second side of the second casing (202), the opening (203) being configured to receive a lid (209), the lid (209) being configured to cover the plurality of components of the electric motor received by the second casing (202).

13. The second casing (202) for the swing arm assembly (200) of the vehicle as claimed in claim 10, wherein the outer surface (202a) of the second casing (202) includes a plurality of fins (210), the plurality of fins (210) being configured to facilitate a heat dissipation from the plurality of components of the electric motor.

14. An electric vehicle, the electric vehicle comprising:
one or more rotating members, the one or more rotating members being configured to support a motion of the vehicle;
an electric motor, the electric motor being configured to propel the motion of the vehicle;
a transmission assembly, the transmission assembly being configured to transmit a torque and a force from the electric motor to the rotating member; and
a swing arm assembly (200), the swing arm assembly (200) comprising:
a first casing (201), the first casing (201) being provided on a first side of the swing arm assembly (200), the first casing (201) being configured to receive a plurality of components of the transmission assembly; and
a second casing (202), the second casing (202) being provided on a second side of the swing arm assembly (200), the second casing (202) including an immediate housing for a plurality of components of an electric motor, the second casing (202) being configured to directly receive the plurality of components of the electric motor through an opening (203) and the electric motor being a coverless electric motor.
